# EUROPÄISCHE PATENTSCHRIFT

(11) **EP 2 949 910 B1**
(45) Veröffentlichungstag und Bekanntmachung des Hinweises auf die Patenterteilung: **13.03.2019**
(21) Anmeldenummer: 15168468.5
(22) Anmeldetag: 20.05.2015
(51) Int. Cl.: F02K 1/72

(54) **SCHUBUMKEHRKASKADENELEMENT EINER FLUGGASTURBINE**
THRUST REVERSER CASCADE ELEMENT OF AN AIRCRAFT GAS TURBINE
ÉLÉMENT INVERSEUR DE POUSSÉE À CASCADE D'UNE TURBINE À GAZ

(30) Priorität: 26.05.2014 DE 102014210025
(43) Veröffentlichungstag der Anmeldung: 02.12.2015
(73) Patentinhaber: Rolls-Royce Deutschland Ltd & Co KG, 15827 Blankenfelde-Mahlow (DE)
(72) Erfinder: Starovic, Aleksa, 10829 Berlin (DE); Kuhtz, Moritz, 01069 Dresden (DE); Hufenbach, Werner, 01324 Dresden (DE)
(74) Vertreter: Hoefer & Partner Patentanwälte mbB

(56) Entgegenhaltungen:
- WO-A1-2013/021110
- WO-A1-2015/119740
- WO-A2-2015/080785
- DE-A1-102011 008 917
- US-A- 4 722 821
- US-A- 4 778 110
- US-A1- 2007 261 410

## Beschreibung

Die Erfindung bezieht sich auf ein Schubumkehrkaskadenelement einer Fluggasturbine gemäß den Merkmalen des Oberbegriffs des Anspruches 1.

Bei Fluggasturbinen ist es bekannt, zum Zwecke der Verzögerung eines gelandeten Flugzeugs eine Schubumkehrvorrichtung einzusetzen, mittels der der aus der Fluggasturbine, insbesondere deren Nebenstromkanal, austretende Luftstrom umgeleitet wird. Zu diesem Zweck ist es bekannt, einen hinteren Bereich einer Triebwerksverkleidung entweder in Axialrichtung zu verschieben oder an dem hinteren Bereich Schubumkehrtüren zu öffnen. Hierdurch ist es möglich, Kaskadenelemente zum Einsatz zu bringen, welche Umlenkeinrichtungen oder Schubumkehrprofile aufweisen, um die austretende Luftströmung umzulenken. Derartige Konstruktionen sind beispielsweise aus der DE 10 2011 008 917 A1 oder der US 4 030 290 A vorbekannt.

Bei den vorbekannten Schubumkehrelementen handelt es sich um metallische Strukturen, die mit Trägern oder Tragrahmen versehen sind und eine Vielzahl von Stützstreben oder Ähnliches aufweisen. Dies führt zum einen zu einem hohen Gesamtgewicht, zum anderen resultiert durch den vorbekannten Aufbau ein nicht zufriedenstellendes Strömungsverhalten.

Wie erwähnt, nutzen Flugzeugtriebwerke Schubumkehrsysteme zur Bremsunterstützung. Hierdurch wird zum einen der Bremsweg verkürzt, was insbesondere bei nasser oder glatter Landebahn sachdienlich ist. Zum anderen schonen die Schubumkehrsysteme die Bremsen und die Räder der Flugzeuge, da diese durch die Bremsvorgänge weniger stark belastet werden. Hierdurch ergeben sich vergrößerte Wartungsintervalle der Bremsen und Räder, welche wiederum mit Kosteneinsparungen verbunden sind.

Die beschriebenen Schubumkehrsysteme lenken, wie erwähnt, die aus der Fluggasturbine austretende Luftströmung um. Daraus ergibt sich, dass die Wirkung der Schubumkehrsysteme von der zur Verfügung stehenden Ausströmfläche abhängt. Bei den aus dem Stand der Technik bekannten gitterartigen Kaskadenelementen wird die Luftströmung entweder axial oder tangential, bezogen auf die Mittelachse der Fluggasturbine, umgelenkt. Hierdurch ergeben sich Nachteile im Hinblick auf die Strömungsführung, da bei den aus dem Stand der Technik bekannten Konstruktionen insbesondere der obere und der untere Bereich der Fluggasturbine nicht oder nur teilweise für die Schubumkehr genutzt werden. Der Grund liegt darin, dass eine Anströmung des Flügels des Flugzeuges vermieden werden soll und dass eine Ausströmung auf die Oberfläche der Landebahn unterwünscht ist, um ein Aufwirbeln von Schmutz- und Staubpartikeln zu vermeiden. Die aus dem Stand der Technik bekannten Systeme können somit nur einen Teil des Umfangs der Fluggasturbine für die Schubumkehr nutzen.

Die US 4 778 110 A offenbart ein Schubumkehrkaskadenelement, bei welchem ein mehrgliedriger Rahmen einstückig mit einer Vielzahl von Schubumkehrprofilen aus einem Faser-Kunststoff-Verbund gefertigt ist.

Ein ähnliches Schubumkehrkaskadenelement mit mehrfach verstrebten Schubumkehrprofilen aus einem Komposite-Material zeigt die DE 10 2011 008 917 A1.

Eine weitere Konstruktion eines Kaskadenelements ist aus der WO 2013/021110 A1 bekannt. Diese Konstruktion weist einen mehrgliedrigen Rahmen auf, in welchem mehrfach verstrebte Schubumkehrprofile angeordnet sind. Diese können aus einem Komposite-Material bestehen.

Aus der US 2007/0261410 A1 ergibt sich eine Kaskadenelement-Ausgestaltung, welche eine Vielzahl von Passagen oder Öffnungen zur Durchleitung von Luft aufweist und aus einem Komposite-Material hergestellt ist.

Aus der US 4 722 821 A ist ein Kaskadenelement bekannt, bei welchem ein metallischer Rahmen vorgesehen ist, welcher mit einem Komposite-Material umspritzt ist.

Der Erfindung liegt die Aufgabe zugrunde, ein Schubumkehrkaskadenelement einer Fluggasturbine der eingangs genannten Art zu schaffen, welches bei einfachem Aufbau und einfacher, kostengünstiger Herstellbarkeit die Nachteile des Standes der Technik vermeidet und eine optimale Strömungsführung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass das Schubumkehrkaskadenelement aus einem Faser-Kunststoff-Verbund (FKV) und oder in einer hybriden Bauweise mit unterschiedlichen Werkstoffen gefertigt ist.

Durch die erfindungsgemäße Ausgestaltung ergeben sich eine Reihe erheblicher Vorteile. Faser-Kunststoff-Verbunde zeichnen sich durch hohe spezifische mechanische Eigenschaften aus. Diese ermöglichen einen hohen Leichtbaugrad, so dass es möglich ist, das erfindungsgemäße Schubumkehrkaskadenelement mit sehr geringem Gewicht herzustellen.

Durch die hohen mechanischen Festigkeiten ergibt sich weiterhin die Möglichkeit, komplexe Profilquerschnitte und Formen der Schubumkehrprofile zu realisieren. So ist es beispielsweise möglich, mehrfach gekrümmte Schubumkehrprofile auszubilden, die über ihre Länge im Querschnitt verdreht sein können. Es ist somit möglich, ein individuelles Strömungsprofil zu realisieren, welches sich durch einen hohen Wirkungsgrad auszeichnet. Somit können die erfindungsgemäßen Schubumkehrkaskadenelemente insbesondere an Bereichen der Fluggasturbine eingesetzt werden, an welchen aus strömungstechnischen Gründen beim Stand der Technik keine Schubumkehrelemente eingesetzt wurden, beispielsweise am oberen oder unteren Bereich der Fluggasturbine. Durch die Kombination des erfindungsgemäß vorgeschlagenen Werkstoffs und die Möglichkeit der optimierten Geometrie der Schubumkehrprofile ist es somit möglich, gänzlich neue Lösungswege für die Schubumkehr zu realisieren, wobei das geringe Gewicht der erfindungsgemäßen Schubumkehrkaskadenelemente zusammen mit der strömungsangepassten Konstruktion besondere Vorteile bildet.
In besonders günstiger Ausgestaltung der Erfindung ist vorgesehen, dass die Schubumkehrprofile im Querschnitt ein Strömungsprofil aufweisen und/oder im Wesentlichen parallel zueinander angeordnet sind. Durch die Anordnung und Profilgestaltung ergibt sich eine optimierte Wirkungsweise, welche zu einer erheblichen Steigerung des Bremseffektes eines Flugzeugs führen.
Das erfindungsgemäße Schubumkehrkaskadenelement weist im Vergleich zum Stand der Technik, da es einstückig ausgebildet ist, eine erheblich verringerte Anzahl an Einzelteilen auf, wodurch sich sowohl das Gesamtgewicht, als auch der Fertigungsaufwand reduzieren lassen. Durch die hohe mechanische Festigkeit der Schubumkehrprofile ist es erfindungsgemäß ausreichend, diese in einem äußeren Rahmen zu lagern. Weitere Verstrebungen zwischen den einzelnen Profilen sind nicht erforderlich. Hierdurch erhöht sich die wirksame Strömungsfläche, wodurch sich wiederum eine Steigerung des Wirkungsgrades ergibt.
Durch die Ausgestaltung der Schubumkehrprofile als Strömungsprofile und durch die Möglichkeit, die einzelnen Schubumkehrprofile dreidimensional zu optimieren, ergibt sich eine weitere Steigerung der mechanischen Belastbarkeit des Schubumkehrkaskadenelements.
Das erfindungsgemäße Schubumkehrkaskadenelement kann bei den üblichen Fluggasturbinen anstelle der aus dem Stand der Technik bekannten Kaskadenelemente eingesetzt werden, so dass eine vielseitige Anwendbarkeit gewährleistet ist. Dabei kann das erfindungsgemäße Kaskadenelement entweder mittels seitlicher Antriebe oder mittels einer mittig angeordneten Antriebsschiene bewegt werden. Somit ist es für unterschiedliche Schubumkehrkonzepte geeignet.

Im Folgenden wird die Erfindung anhand eines Ausführungsbeispiels in Verbindung mit der Zeichnung beschrieben. Dabei zeigt:
- Fig. 1: eine vereinfachte Teil-Vorderansicht eines Flugzeugs mit Kaskadenelemente und zugehöriger Strömung gemäß dem Stand der Technik,
- Fig. 2: eine vereinfachte Teil-Seitenansicht einer erfindungsgemäßen Fluggasturbine mit erfindungsgemäßen Schubumkehrkaskadenelementen,
- Fig. 3: eine perspektivische Darstellung eines in Fig. 2 gezeigten Schubumkehrkaskadenelements,
- Fig. 4: eine Draufsicht auf die Ausgestaltung gemäß Fig. 3,
- Fig. 5: eine perspektivische Teil-Schnittansicht durch Schubumkehrprofile, und
- Fig. 6: eine Darstellung, analog Fig. 1, der erfindungsgemäß resultierenden Strömungsführung.

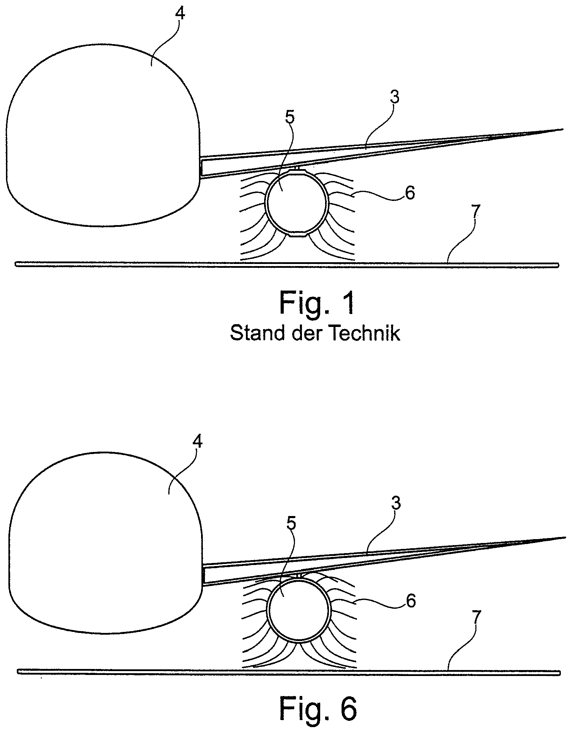

Die Fig. 1 zeigt in schematischer Vorderansicht einen Teil eines Flugzeugs, nämlich einen Flügel 3, welcher an einem Rumpf 4 befestigt ist und eine Fluggasturbine 5 trägt. Die Fluggasturbine 5 ist im Zustand der Schubumkehr dargestellt, die Fig. 1 zeigt die austretenden Strömungslinien 6. Dabei ist ersichtlich, dass der obere und der untere Bereich der Fluggasturbine 5 nicht für die Schubumkehr genutzt werden kann, um eine direkte Anströmung der Unterseite des Flügels 3 und der Oberfläche der Landebahn 7 zu vermeiden. Hieraus folgt, dass ein nicht unerheblicher Umfangsbereich der Fluggasturbine 5 nicht für die Schubumkehr verwendet werden kann.

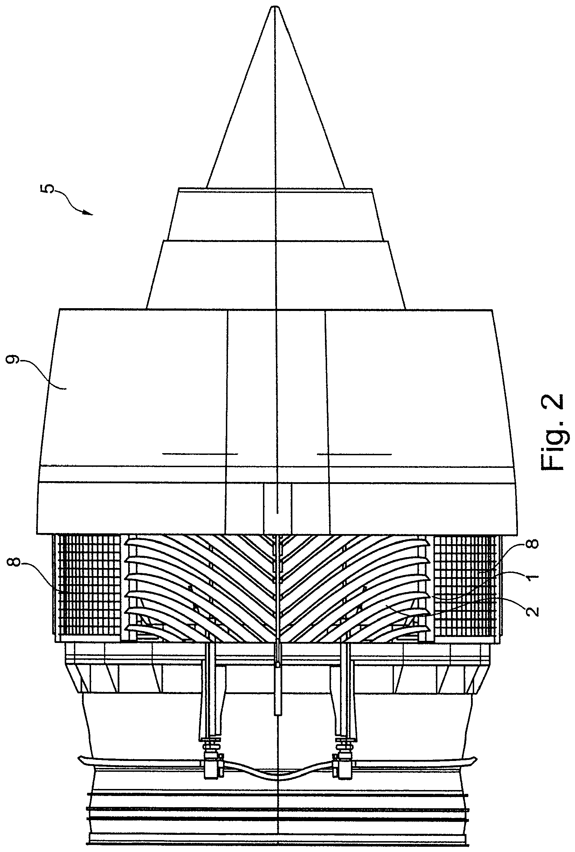

Die Fig. 2 zeigt eine Teilansicht einer Fluggasturbine 5 in Schubumkehrposition, in welcher eine hintere Triebwerksverkleidung 9 axial verschoben wurde, um eine Austrittsfläche für eine Schubumkehrströmung zu schaffen. Die Fig. 2 zeigt eine Ausgestaltung, bei welcher auch konventionelle Kaskadenelemente 8 zur Anwendung gelangen. Diese sind, so wie dies beispielsweise aus der DE 10 2011 008 917 A1 bekannt ist, gitterartig ausgebildet und weisen eine Vielzahl von Verstrebungen auf. Hierdurch sinkt die zur Verfügung stehende Strömungsfläche und es ergeben sich die oben stehend diskutierten Nachteile.

Die Fig. 2 zeigt im mittleren Bereich der Fluggasturbine 5 zwei erfindungsgemäße Schubumkehrkaskadenelemente. Diese weisen einen starren Rahmen 1 auf, in welchem mehrere Schubumkehrprofile 2 angeordnet sind.

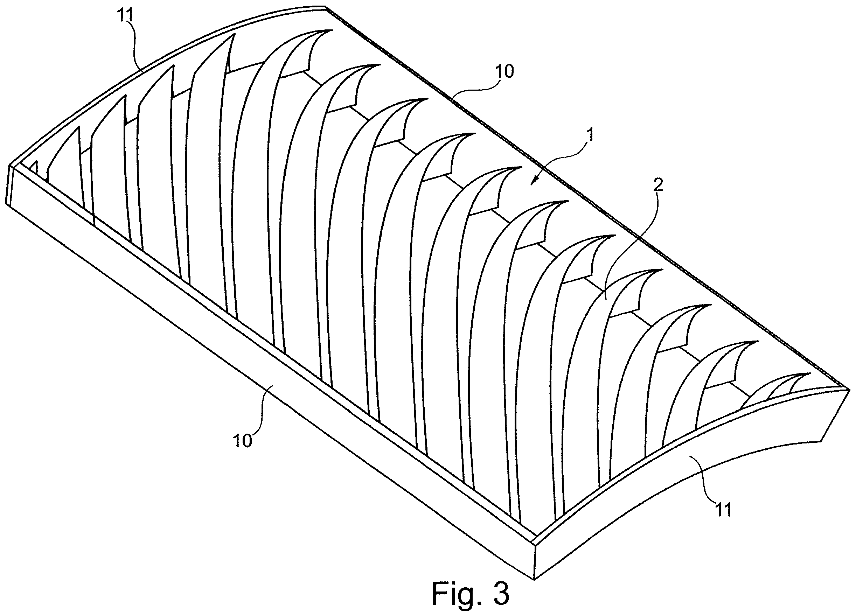

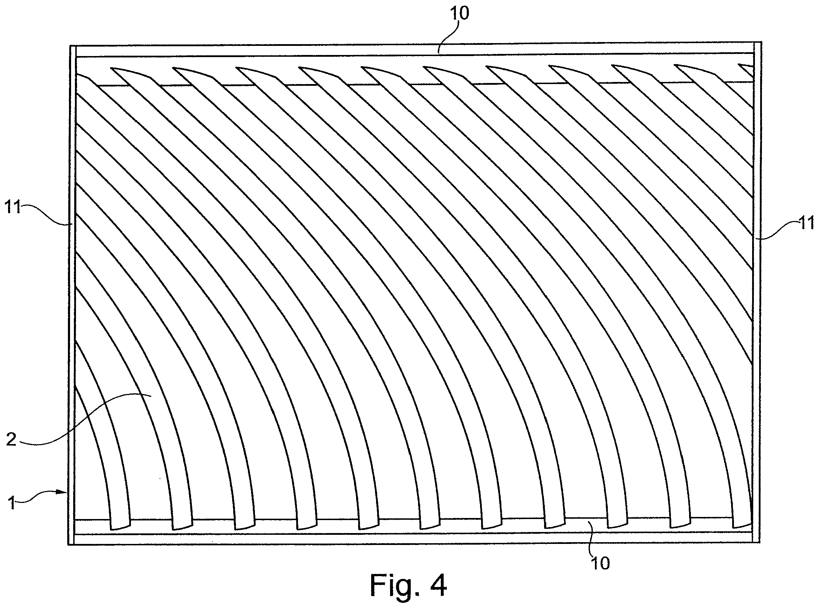

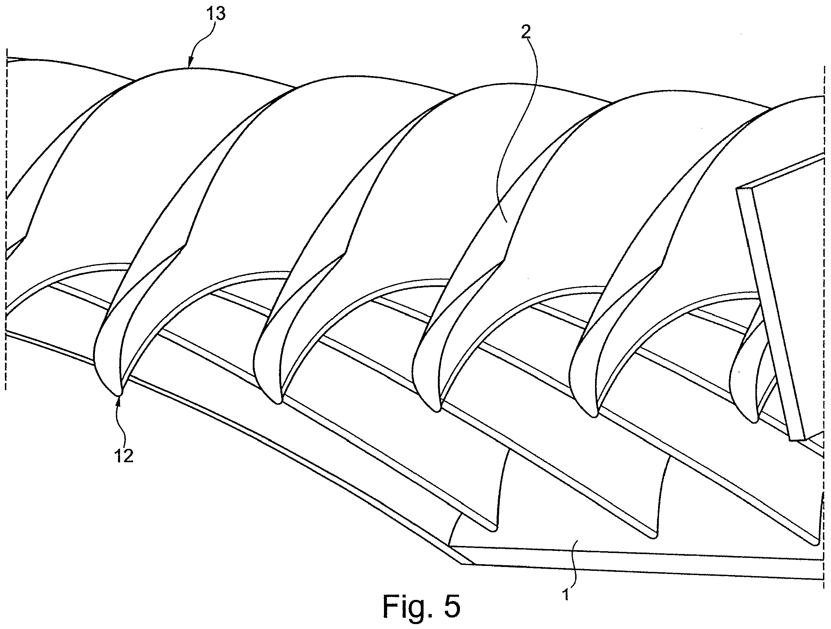

Die Fig. 3 bis 5 zeigen in perspektivischer Darstellung (Fig. 3) in Draufsicht (Fig. 4) sowie in perspektivischer Schnittansicht (Fig. 5) ein Ausführungsbeispiel eines erfindungsgemäßen Schubumkehrkaskadenelements. Dieses umfasst einen starren, geschlossenen Rahmen 1, in welchem einstückig eine Vielzahl von Schubumkehrprofilen 2 angeordnet sind. Die Schubumkehrprofile 2 verlaufen im Wesentlichen parallel zueinander, so wie sich dies aus der Fig. 4 ergibt. Sowohl der Rahmen 1 als auch die Schubumkehrprofile 2 sind aus einem Faser-Kunststoff-Verbund (FKV) gefertigt.

Wie sich aus den Fig. 3 bis 5 ergibt, ist es möglich, das erfindungsgemäße Schubumkehrkaskadenelement hinsichtlich seiner Geometrie zu optimieren. Dabei ist beispielsweise, wie in Fig. 3 gezeigt, der Rahmen so ausgebildet, dass er zwei gegenüberliegende gerade Rahmenstreben 10 aufweist, während die beiden anderen Rahmenstreben 11 gebogen sind, um an die Umfangsrundung der Fluggasturbine (s. Fig. 2) angepasst zu werden. Dementsprechend weisen die Schubumkehrprofile 2 eine dreidimensional optimierte Form auf und bilden wirksame Strömungsprofile. Die Schubumkehrprofile 2 können bogenförmig oder gekrümmt ausgebildet sein, so wie dies in der Draufsicht der Fig. 4 dargestellt ist. Dies führt zu einer Versteifung und einer Erhöhung der mechanischen Festigkeit der einzelnen Schubumkehrprofile. Weiterhin ist es, wie in Fig. 5 gezeigt, möglich, die Schubumkehrprofile 2 als optimierte Strömungsprofile mit einer Anströmkante 12 und einer Abströmkante 13 zu gestalten. Hieraus ergibt sich nicht nur, wie beim Stand der Technik, eine reine Strömungsumleitung des Schubumkehrluftstroms, sondern auch eine erhebliche Steigerung des Wirkungsgrades durch die optimierten Querschnitte der Schubumkehrprofile 2, welche somit eine Saugseite und eine Druckseite aufweisen und somit zu einer größeren Kraftübertragung führen.

Insgesamt ergeben sich erfindungsgemäß somit eine vereinfachte geometrische Ausgestaltung, ein geringeres Gewicht, geringere Herstellungskosten, eine einfachere Wartungsmöglichkeit und ein gesteigerter Wirkungsgrad der Schubumkehr. Die Steigerung des Wirkungsgrades ergibt sich insbesondere daraus, dass größere Luftmengen in effizienter Weise zur Schubumkehr umgelenkt werden können.

Die Fig. 6 zeigt eine Ansicht, analog Fig. 1. Dabei ergibt sich insbesondere, dass die erfindungsgemäßen Schubumkehrkaskadenelemente an Bereichen der Fluggasturbine 5 angeordnet sind, an welchen gemäß dem Stand der Technik im Hinblick auf die Strömungsführung keine Schubumkehr möglich war, insbesondere an den oberen und unteren Bereichen der Fluggasturbine gemäß der Darstellung von Fig. 6.

### Bezugszeichenliste

- 1: Rahmen
- 2: Schubumkehrprofil
- 3: Flügel
- 4: Rumpf
- 5: Fluggasturbine
- 6: Strömungslinie
- 7: Landebahn
- 8: konventionelles Kaskadenelement
- 9: Triebwerksverkleidung
- 10: Rahmenstrebe
- 11: Rahmenstrebe
- 12: Anströmbereich
- 13: Abströmbereich

## Patentansprüche

1. Schubumkehrkaskadenelement einer Fluggasturbine mit einem starren Rahmen (1) sowie mit mehreren, in dem Rahmen (1) befestigten Schubumkehrprofilen (2), wobei das Schubumkehrkaskadenelement einstückig mit dem Rahmen (1) aus Faser-Kunststoff-Verbund gefertigt ist, **dadurch gekennzeichnet, dass** die Schubumkehrprofile (2) an ihren Enden mit dem Rahmen (1) verbunden sind und in ihrer Längserstreckung ohne Verbindung mit dem Rahmen (1) und ohne Verstrebungen zwischen den einzelnen Schubumkehrprofilen (2) verlaufend angeordnet sind, wobei der Rahmen (1) zwei gegenüberliegende gerade Rahmenstreben (10) und zwei gebogene Rahmenstreben (11) aufweist und wobei die Schubumkehrprofile (2) in Längsrichtung bogenförmig oder gekrümmt ausgebildet sind.

2. Schubumkehrkaskadenelement nach Anspruch 1, **dadurch gekennzeichnet, dass** die Schubumkehrprofile (2) im Wesentlichen parallel zueinander angeordnet sind.

3. Schubumkehrkaskadenelement nach Anspruch 1 oder 2, **dadurch gekennzeichnet, dass** die Schubumkehrprofile (2) im Querschnitt ein Strömungsprofil aufweisen.

## Claims

1. Thrust reverser cascade element of an aircraft gas turbine with a rigid frame (1) and with several thrust reverser profiles (2) mounted in the frame (1), wherein the thrust reverser cascade element is made in one piece with the frame (1) from fiber-plastic composite, **characterized in that** the thrust reverser profiles (2) are connected to the frame (1) at their ends and arranged in their longitudinal extent without being connected to the frame (1) and without having struts between the individual thrust reverser profiles (2), wherein the frame (1) has two opposite, straight frame struts (10) and two curved frame struts (11), and wherein the thrust reverser profiles (2) are designed arched or curved in the longitudinal direction.

2. Thrust reverser cascade element in accordance with Claim 1, **characterized in that** the thrust reverser profiles (2) are arranged substantially parallel to one another.

3. Thrust reverser cascade element in accordance with Claim 1 or 2, **characterized in that** the thrust reverser profiles (2) have a flow profile in cross-section.

## Revendications

1. Élément de cascade d'inverseur de poussée d'une turbine à gaz aéronautique avec un cadre rigide (1) ainsi qu'avec plusieurs profils d'inverseur de poussée (2) fixés dans le cadre (1), sachant que l'élément de cascade d'inverseur de poussée est fabriqué d'un seul tenant avec le cadre (1) en composite plastique renforcé de fibres, **caractérisé en ce que** les profils d'inverseur de poussée (2) sont reliés à leurs extrémités avec le cadre (1) et sont disposés dans leur extension longitudinale sans être reliés au cadre (1) et sans disposer d'entretoises entre les différents profils d'inverseur de poussée (2), sachant que le cadre (1) présente deux poutres de cadre droites opposées (10) et deux poutres de cadre recourbées (11) et sachant que les profils d'inverseur de poussée (2) sont en forme d'arc ou courbés dans le sens longitudinal.

2. Élément de cascade d'inverseur de poussée selon la revendication n° 1, **caractérisé en ce que** les profils d'inverseur de poussée (2) sont disposés essentiellement parallèles les uns par rapport aux autres.

3. Élément de cascade d'inverseur de poussée selon la revendication n° 1 ou n° 2, **caractérisé en ce que** les profils d'inverseur de poussée (2) présentent un profil d'écoulement en coupe transversale.
